Europäisches Patentamt

European Patent Office

Office européen des brevets

(11) Publication number: **0 567 147 A1**

## EUROPEAN PATENT APPLICATION

(21) Application number: 93106642.7

(22) Date of filing: 23.04.93

(51) Int. Cl.5: **B29C 31/00**, B29D 30/52

(30) Priority: 24.04.92 JP 106783/92

(43) Date of publication of application:
27.10.93 Bulletin 93/43

(84) Designated Contracting States:
DE ES FR GB IT

(71) Applicant: BRIDGESTONE CORPORATION
10-1 Kyobashi 1-Chome,
Chuo-Ku
Tokyo 104(JP)

(72) Inventor: Matsumoto, Yoshiyuki
1275-2, Ohaza-Oda
Amagi-shi Fukuoka-ken(JP)

(74) Representative: Görg, Klaus, Dipl.-Ing. et al
Hoffmann, Eitle & Partner
Patent- und Rechtsanwälte
Postfach 81 04 20
D-81904 München (DE)

(54) Winding liner for an unvulcanized rubber material.

(57) A winding liner (10) for an unvulcanized rubber material, on which an unvulcanized rubber material (22) such as a band-shaped material for a tire tread portion is placed. The winding liner is wound around a winding shaft (16) so as to accommodate the unvulcanized rubber material. The winding liner includes a base portion (12), to which the unvulcanized rubber material (22) is adhered. The base portion does not expand and contract, but is bendable in a longitudinal direction thereof. Further, the base portion is provided with square pillar-shaped raised portions (14) on a surface (12A) thereof. The raised portions are positioned along the longitudinal direction of the base portion at both transverse direction end portions (12B, 12C) of the base portion. A space (20) for accommodating the unvulcanized rubber material is thereby defined between the base portion and the raised portions. As a result, contraction of tread rubber can be restrained and deformation of side rubber can be prevented because the unvulcanized rubber material is adhered to the base portion so as to be held within the space.

FIG. 1

EP 0 567 147 A1

## BACKGROUND OF THE INVENTION

### 1. Field of the Invention

The present invention relates to a winding liner for an unvulcanized rubber material and a holding device for take-up of the winding liner, which are used to wind an unvulcanized rubber material, such as a band-shaped material, onto the winding liner so as to retain the shape of the band-shaped material, the band-shaped material being, for example, tire tread rubber or the like, and in particular, side rubber or the like, whose transverse cross-section varies in shape.

### 2. Description of the Related Art

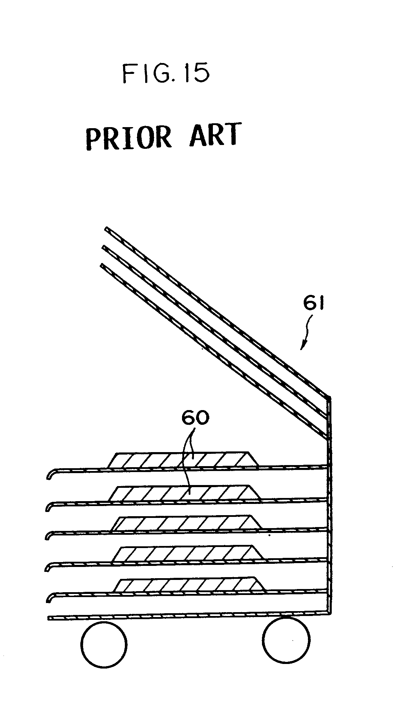

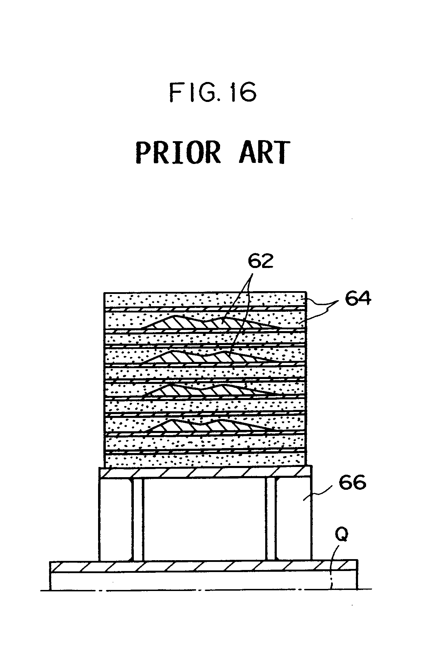

FIG. 15 and FIG. 16 are illustrations of related art. FIG. 15 illustrates several pieces of styled tread rubber 60, which are placed on a booking type (stacking) carriage 61 after the tread rubber 60 is cut into pieces of a given length when cooling down. FIG. 16 illustrates a long strip of side rubber 62, which is wound around a winding core member 66 by means of a winding liner 64. The winding liner 64 includes either a pliable liner, which is made of polyurethane foam and the like, or a fabric liner, which is formed of organic fibers.

However, a drawback with regard to the pieces of tread rubber 60, which have been respectively cut to a given length, is that contraction occurs therein while these pieces are left on the carriage 61 before use for tire formation. This contraction results in deterioration of the dimensional accuracy of the tread rubber 60, which impairs the uniformity of a tire formed of such tread rubber.

The long strip of side rubber 62 wound by the winding liner 64 is cut into pieces immediately before use for tire formation so as to restrain contraction of the side rubber 62. This procedure ensures dimensional accuracy but has the following disadvantage: because the winding liner 64 expands and contracts, portions (not shown) of the winding liner 64 in a rolled state, which are positioned at a lower half of a winding shaft Q, sag due to weight of the strip of side rubber 62 as well as weight of the winding liner 64 when the winding shaft Q is in a substantially horizontal position, as shown FIG. 16. This sagging arises results in deformation of the side rubber 62.

## SUMMARY OF THE INVENTION

In view of the aforementioned, an object of the present invention is to provide a winding liner for an unvulcanized rubber material and a holding device for take-up of the winding liner, which are capable of maintaining the shape of the unvulcanized rubber material by, for example, restraining contraction of tread rubber and preventing deformation of side rubber.

A first aspect of the present invention provides a winding liner for an unvulcanized rubber material, comprising: a base portion, on which the unvulcanized rubber material is placed, the base portion being a band-shaped, non-expanding, non-contracting member, and being bendable in a longitudinal direction of the base portion; and, raised portions, which are provided on a surface of the base portion at both transverse direction end portions of the base portion along the longitudinal direction of the base portion, the raised portions being larger in height than the unvulcanized rubber material such that the raised portions, located at one portion of the base portion, contact a reverse side of a neighboring portion of the base portion when the base portion is wound, the neighboring portion being positioned in a radially outward direction from the one portion of the base portion, so that a space for accommodating the unvulcanized rubber material is defined by the raised portions, the reverse side of the neighboring portion and the surface of the one portion of the base portion.

A second aspect of the present invention provides a winding liner for an unvulcanized rubber material, comprising: a base portion, on which the unvulcanized rubber material is placed, the base portion being a band-shaped, non-expanding, non-contracting member and being bendable in a longitudinal direction of the base portion; and, raised portions, which are provided on a surface of the base portion along the longitudinal direction of the base portion at both end portions and an intermediate portion in a transverse direction of the base portion, the raised portions being larger in height than the unvulcanized rubber material such that the raised portions, located at one portion of the base portion, contact a reverse side of a neighboring portion of the base portion when the base portion is wound, the neighboring portion being located in a radially outward direction from the one portion of the base portion, so that spaces for accommodating the unvulcanized rubber material are defined by the raised portions, the reverse side of the neighboring portion and the surface of the one portion of the base portion.

The winding liner according to the first aspect of the present invention includes a band-shaped, non-expanding, non-contracting base portion. Further, the base portion is provided with the raised portions on the surface thereof. The raised portions are located along the longitudinal direction of the base portion at both transverse direction end portions of the base portion. The raised portions are formed of a material such as rubber, and are larger in height than the unvulcanized rubber material. When the base portion is wound, the raised portions, which are located at one portion of the base portion, contact the reverse side of a neighboring portion of the base portion. The neighboring portion is located in a radially outward direction from the one portion of the base portion. A space for accommodating the unvulcanized rubber material is thereby defined between the reverse side of the neighboring portion and the surface of the one portion of the base portion. Accordingly, assuming that the unvulcanized rubber material wound on the surface of the base portion is, for example, a strip of side rubber, a top portion thereof does not contact the reverse side of the neighboring portion. Moreover, even when a winding shaft is in a substantially horizontal position, a lower half of the wound base portion, which is positioned below the center line of the winding shaft, is held taut because the base portion does not expand and contract. As a result, the above-described features can prevent deformation of the side rubber.

Assuming that the unvulcanized rubber material carried on the base portion is, for example, a strip of tread rubber, the strip can be restrained from contracting even when the strip of tread rubber is held in a wound state, and is then cut into pieces immediately before use for tire formation.

Accordingly, the winding liner according to the first aspect can maintain the shape of the unvulcanized rubber material.

The winding liner according the second aspect includes a band-shaped, non-expanding, non-contracting base portion. Further, the base portion is provided with the raised portions on the surface thereof. The raised portions are positioned along the longitudinal direction of the base portion at both end portions and an intermediate portion of the base portion in the transverse direction thereof. The raised portions are made of a material such as rubber, and are larger in height than the unvulcanized rubber material. When the base portion is wound, the raised portions, which are located at one portion of the base portion, contact the reverse side of a neighboring portion of the base portion. The neighboring portion is located in the radially outward direction from the one portion of the base portion. A pair of spaces for accommodating the unvulcanized rubber material is thereby defined between the reverse side of the neighboring portion and the surface of the one portion. The pair of spaces extends along the length of the base portion.

The pair of spaces allows an arrangement in which the unvulcanized rubber material is arranged in two rows on the surface of the base portion. In addition, assuming that the unvulcanized rubber material wound on the base portion is, for example, a strip of side rubber, the strip does not contact the reverse side of the neighboring portion. Further, even when the winding shaft is in a substantially horizontal position, a lower half of the wound base portion, which is positioned below the center line of the winding shaft, does not sag downward because the base portion does not expand and contract. As a result, these features can prevent deformation of the side rubber.

Meanwhile, when the unvulcanized rubber material held on the base portion is, for example, a strip of tread rubber, the strip can be restrained from contracting even when the strip of tread rubber is held in a wound state, and is then cut into pieces immediately before use for tire formation.

Accordingly, the winding liner according to the second aspect can maintain the shape of the unvulcanized rubber material

Further, with a resistance to separation of the unvulcanized rubber material being 150 g/inch or greater at the surface of the base portion, the unvulcanized rubber material, which is positioned at a lower half of the base portion below the center line of the winding shaft, can be prevented from separating from the base portion even when the winding shaft is in a substantially horizontal position. Accordingly, the unvulcanized rubber material does not contact the reverse side of the previously described neighboring portion of the base portion, and deformation of the unvulcanized rubber material can be prevented. In addition, adhesion of the unvulcanized rubber material to the base portion can counteract stresses which occur in the unvulcanized rubber material upon styling thereof. Consequently, contraction of the unvulcanized rubber material after cutting thereof can be limited, and deterioration of dimensional accuracy thereof can be prevented even when the unvulcanized rubber material is left wound for more than two hours before cutting thereof.

Moreover, when the unvulcanized rubber material has a non-symmetric shape and the thickness differs along the width thereof, there is a difference in perimeter between the obverse and reverse of the wound unvulcanized rubber material, which arises from the different thicknesses of the unvulcanized rubber material. In this case, the base portion can be wound around the winding shaft so as to be inclined with respect to the winding shaft. By the thicker portion of the unvulcanized rubber material being positioned at a portion of the base portion at which the perimeter of the base portion is smaller, the difference in perimeter can be corrected. Accordingly, the winding liner 10 can eliminate curling of the unvulcanized rubber material due to the above-described difference in perimeter.

Note that in order to wind the base portion around the winding shaft so that the base portion is inclined with respect to the winding shaft, a winding core member may be formed as, for example, a cylindrical-shaped member which has a tapered portion which corresponds to the difference in thickness of the unvulcanized rubber material.

Moreover, in order to prevent lateral movement of the base portion, associating portions may be provided at both transverse direction end portions of the base portion. When the base portion is wound, the associating portions, which are located at one portion of the base portion, are brought into association with both transverse direction end portions of a neighboring portion of the base portion, the neighboring portion being positioned in a radial direction with respect to the one portion of the base portion. As a result, the base portion can be prevented from being displaced in the transverse direction thereof. This can eliminate interference between the unvulcanized rubber material and the base portion due to the lateral movement of the base portion, which would otherwise deform the unvulcanized rubber material.

Further, the use of a flanged reel on which the winding liner is wound can prevent the lateral movement of the wound base portion. Interference between the unvulcanized rubber material and the base portion due to displacement of the base portion can thereby be eliminated, and deformation of the unvulcanized rubber material can be prevented.

The winding liner for an unvulcanized rubber material and the holding device for take-up of the winding liner according to the present invention, which have the above-described structure, provide an excellent effect in that the shape of the unvulcanized rubber material can be maintained by, for example, limiting contraction of tread rubber, preventing deformation of side rubber, and the like.

BRIEF DESCRIPTION OF THE DRAWINGS

FIG. 1 is a perspective view, illustrating a winding liner for an unvulcanized rubber material and a holding device for take-up of the winding liner according to a first embodiment of the present invention;

FIG. 2 is a partially cross-sectional view, as seen from a side end surface of a winding shaft, illustrating a wound state of the winding liner and the holding device according to the first embodiment;

FIG. 3 is a partially cross-sectional view, taken along a longitudinal axis of the winding shaft, illustrating a wound state of the winding liner and the holding device according to the first embodiment;

FIG. 4A through FIG. 4C are side views, showing variations of a raised portion of the winding liner and holding device according to the first embodiment;

FIG. 5 is a cross-sectional view, as seen from the side end surface of the winding shaft, illustrating a portion of a wound state in which the variation of FIG. 4A is used;

FIGS. 6A and 6B are cross-sectional views, taken along the longitudinal axis of the winding shaft, showing further variations of the raised portion of the winding liner and holding device according to the first embodiment;

FIG. 7 is a cross-sectional view, taken along the longitudinal axis of the winding shaft, showing a portion of a wound state of a variation of the winding liner and holding device according to the first embodiment, in which flanges are provided;

FIG. 8 is a cross-sectional view, taken along the longitudinal axis of the winding shaft, showing a portion of a wound state of another variation of the winding liner and holding device according to the first embodiment, in which collars are provided;

FIG. 9 is a cross-sectional view, taken along the longitudinal axis of the winding shaft, illustrating a portion of a wound state of a winding liner for an unvulcanized rubber material and a holding device for take-up of the winding liner according to a second embodiment of the present invention;

FIG. 10A is a plan view, showing the winding liner and holding device according to the second embodiment;

FIG. 10B is a cross-sectional view, taken along line X-Y of FIG. 10A, illustrating the winding liner according to the second embodiment;

FIG. 11 is a cross-sectional view, taken along the longitudinal axis of the winding shaft, illustrating a portion of a wound state of the winding liner and holding device according to the second embodiment;

FIG. 12A is a cross-sectional view, taken along the longitudinal axis of the winding shaft, illustrating a portion of a wound state of a winding liner for an unvulcanized rubber material and a holding device for take-up of the winding liner according to another embodiment of the present invention;

FIG. 12B is a plan view illustrating the winding liner and the holding device of FIG. 12A;

FIG. 13 is a graph, indicating a relationship between resistance of the liner to separation of the unvulcanized rubber material therefrom and variations in thickness of the rubber material;

FIG. 14 is a graph, showing variations in length between two types of unvulcanized rubber materials, one of which was held on the winding liner, and the other of which was not;

FIG. 15 is a side view, showing a booking type carriage; and,

FIG. 16 is a cross-sectional view, taken along a longitudinal axis of a winding shaft, showing a portion of a wound state of a base portion of a winding liner for an unvulcanized rubber material and a holding device for take-up of the winding liner according to the related art.

## DETAILED DESCRIPTION OF THE INVENTION

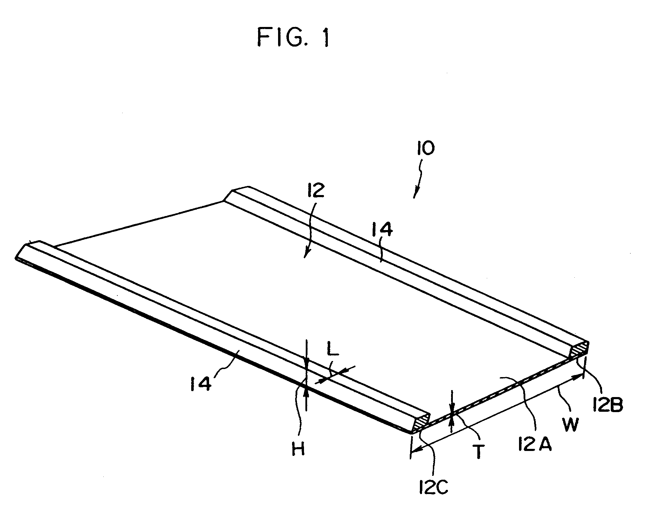

A first embodiment of the present invention will now be described with reference to FIG. 1 through FIG. 3.

FIG. 1 illustrates a winding liner 10 which includes a base portion 12 and raised portions 14. The base portion 12 is formed in a band shape, and is provided with the raised portions 14 on a surface 12A thereof. The raised portions 14 are positioned at both end portions 12B and 12C of the base portion 12 in the transverse direction thereof so as to extend continuously along the length of the base portion 12.

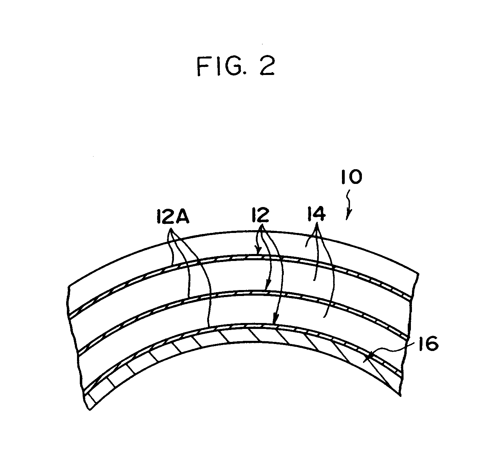

The base portion 12 is fabricated from an acetal homopolymer having thickness (T) of 1 mm and width (W) of 300 mm. The base portion 12 does not expand and contract, but is flexible in the longitudinal direction thereof, as shown in FIG. 2. The surface 12A provides a resistance of at least 150 g/inch to separation of an unvulcanized rubber material from the surface 12A.

Each of the raised portions 14 is formed of a square pillar-shaped rubber material having thickness (H) of 12 mm and width (L) of 20 mm so as to allow the winding liner 10 to be wound around a winding core member 16, as illustrated in FIG. 2.

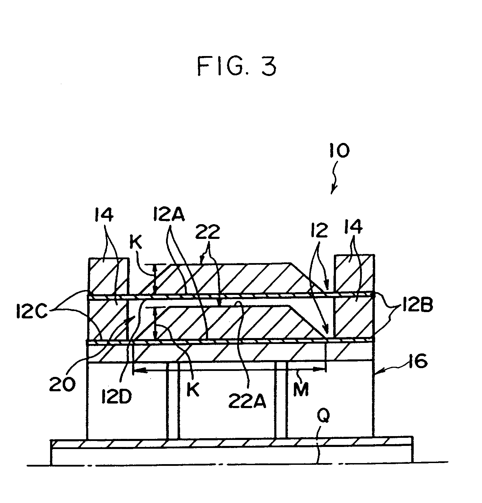

Referring to FIG. 3, when the winding liner 10 is wound, the pair of raised portions 14, which is positioned at one portion of the base portion 12 contacts a reverse side 12D of a neighboring portion of the base portion 12, the neighboring portion being located in a radially outward direction from the one portion of the base portion 12. A space 20 for accommodating an unvulcanized rubber material 22 is thereby defined between the neighboring portion and the one portion of the base portion 12.

Next, the operation of the present embodiment will be described.

As shown in FIG. 3, when the winding liner 10 according to the present embodiment is wound around the winding core member 16, the raised portions 14, which are positioned at one portion of the base portion 12, contact the reverse side 12D of a neighboring portion of the base portion 12, the neighboring portion being located in a radially outward direction from the one portion of the base portion 12. The space 20 for accommodating the unvulcanized rubber material 22 is thereby formed between the surface 12A of the one portion and the reverse side 12D of the neighboring portion. On the assumption that the unvulcanized rubber material 22 wound on the surface 12A is a strip of side rubber having thickness (K) of less than 12 mm, for example, thickness (K) of 10 mm and width (M) of 200 mm, a top portion 22A of the side rubber does not contact the reverse side 12D of the neighboring portion of the base portion 12.

Further, even when an shaft of the winding core member 16, i.e., a winding shaft Q, is in a substantially horizontal position, portions (not shown) of the base portion 12, which are located below the center line of the winding core member 16, are held taut because the base portion 12 does not expand and contract. As a result, the top portion 22A of the strip of side rubber, which is positioned at one portion of the base portion 12, does not contact the reverse side 12D of a neighboring portion of the base portion 12, the neighboring portion being located in the radially outward direction from the aforementioned one portion. In other words, the above-described features can prevent deformation of the side rubber.

Moreover, the surface 12A of the base portion 12 according to the present embodiment exhibits a resistance of at least 150 g/inch to separation of an unvulcanized rubber material from the surface 12A. As a result, even when the winding shaft Q is in a substantially horizontal position, the unvulcanized rubber material 22, which is positioned below the center line of the winding core member 16, can be prevented from separating from the base portion 12 due to weight of the unvulcanized rubber material 22 itself and can be prevented from contacting the reverse side 12D of the previously described neighboring portion of the base portion 12. Deformation of the unvulcanized rubber material 22 can thereby be prevented.

Further, the adhering of the unvulcanized rubber material 22 to the base portion 12 can counteract stresses which are generated in the unvulcanized rubber material 22 upon styling thereof. Thus, the contraction of the unvulcanized rubber material 22 after cutting thereof can be limited without detracting from the dimensional accuracy of the unvulcanized rubber material 22 even when the unvulcanized rubber material 22 is left wound for more than two hours before cutting thereof.

Assuming that the unvulcanized rubber material 22 is a strip of tread rubber, the strip can be restrained from contracting even when the strip of tread rubber is held in a wound state and is then cut into pieces immediately before being used for tire formation.

In this way, the winding liner 10 according to the present embodiment functions to maintain the shape of the unvulcanized rubber material 22.

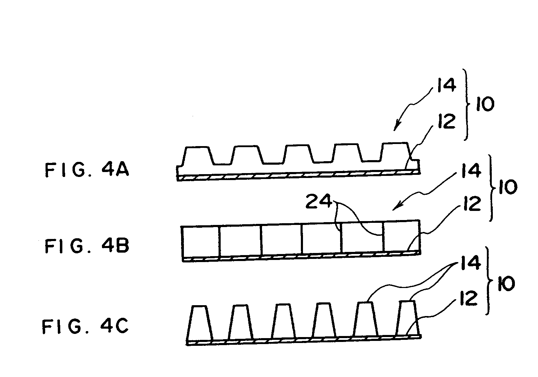

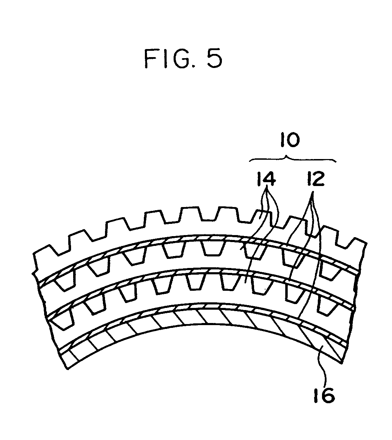

According to the present embodiment, the raised portion 14 includes a square pillar having thickness (T) of 12 mm and width (L) of 20 mm. However, the raised portion 14 is not limited to the same in terms of shape thereof. As shown in FIG. 4A, a square pillar-shaped member, having a series of concave and convex portions formed in an upper portion of the pillar-shaped member, may be utilized. Referring to FIG. 5, when the winding liner 10 is wound, this type of raised portion 14 is readily formed into a curvilinear shape, with the concave portions thereof being expanded. In addition, as illustrated in FIG. 4B, the raised portion 14 may be a square pillar-shaped member which is formed with slits 24 at predetermined intervals in the longitudinal direction thereof. Moreover, as shown in FIG. 4C, a plurality of trapezoidal raised portions 14 may be disposed on the base portion 12 so as to be spaced apart from each other at given intervals.

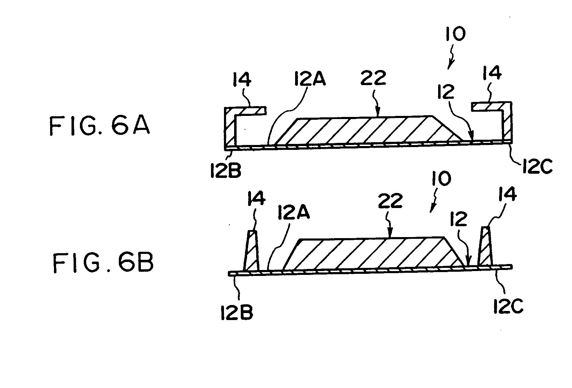

As seen in FIG. 6A, the raised portions 14 may be a pair of plate members which is provided on the surface 12A at the respective end portions 12B and 12C in the transverse direction of the base portion 12 so as to extend upward therefrom. Upper end portions of the plate members are bent at substantially right angles in directions of approaching each other. Alternatively, as shown in FIG. 6B, the raised portions 14 may be a pair of plate-shaped bodies respectively having a trapezoidal cross-section. These raised portions 14 are provided on the surface 12A at the respective end portions 12B and 12C so as to extend upward therefrom.

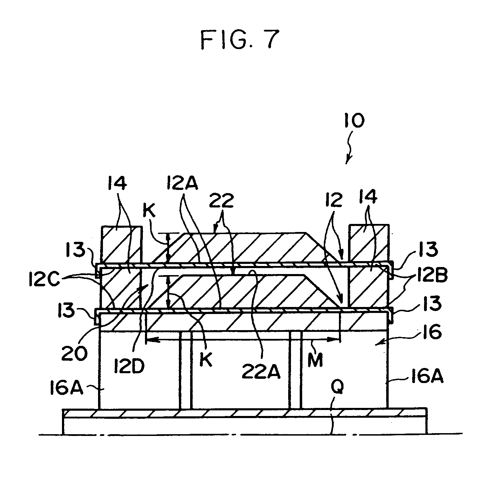

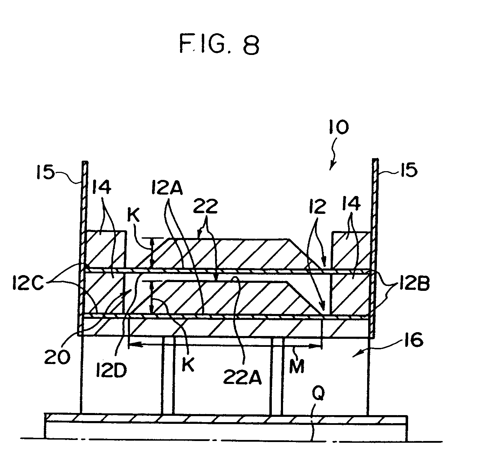

FIG. 7 depicts another alternative which employs flanges 13 in order to prevent movement of the wound winding liner 10 in the transverse direction of the base portion 12 (i.e., in left and right directions in FIG. 7) and in order to prevent deformation of the winding liner 10. The flanges 13 are provided at the end portions 12B and 12C so as to serve as associating portions. More specifically, when the base portion 12 is wound, the flanges 13, which are located at one portion of the base portion 12, are brought into association with the raised portions 14 of a neighboring portion of the base portion 12, or are brought into association with both end surface portions 16A of the winding core member 16. The neighboring portion is positioned in a radial direction with respect to the aforementioned one portion of the base portion 12. Moreover, as is illustrated in FIG. 8, the winding liner 10 may be wound around a flanged reel, in which flanges are provided at both edge portions of the winding core member 16.

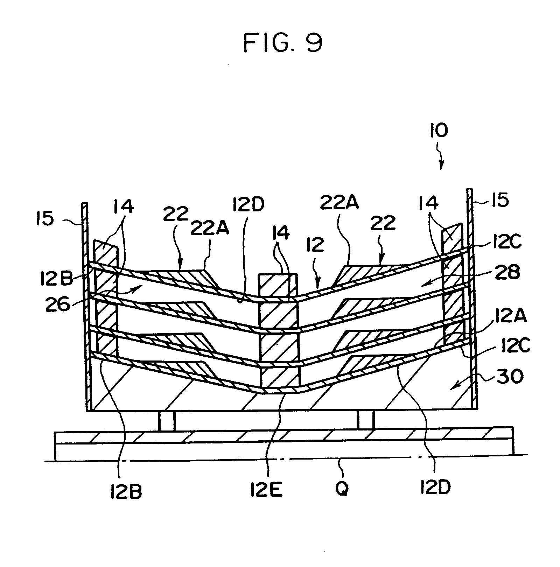

Next, a second embodiment of the present invention will be described with reference to FIG. 9 through FIG. 11.

Note that the same reference characters are hereinafter given for members common to those described in the first embodiment, and descriptions related thereto will be omitted.

Referring now to FIG. 9, a winding liner 10 according to the present embodiment is provided with an additional raised portion 14 at a transverse-direction central portion 12E which is located at an intermediate portion of the base portion 12 in the transverse direction thereof. The additional raised portion 14 is thicker than the unvulcanized rubber material 22. When the base portion 12 is wound, the raised portion 14, which is positioned at one portion of the base portion 12, contacts a reverse side 12D of a neighboring portion of the base portion 12, the neighboring portion being located in a radially outward direction from the one portion of the base portion 12. As a result, a pair of spaces 26 and 28 for accommodating the unvulcanized rubber material 22 is defined between a surface 12A of the one portion and the reverse side 12D of the neighboring portion. The pair of spaces 26 and 28 extends along the length of the base portion 12.

Further, in the winding liner 10, the base portion 12 is wound around the winding shaft Q so as to be inclined with respect to the winding shaft Q. More specifically, the winding core member 16 is shaped as a drum, and the base portion 12 is wound therearound with the central portion 12E being nearest to the winding shaft Q. The other portions of the base portion 12, which are at successively smaller distances from both end portions 12B and 12C of the base portion 12 in the transverse direction thereof, are spaced at successively greater distances from the winding shaft Q.

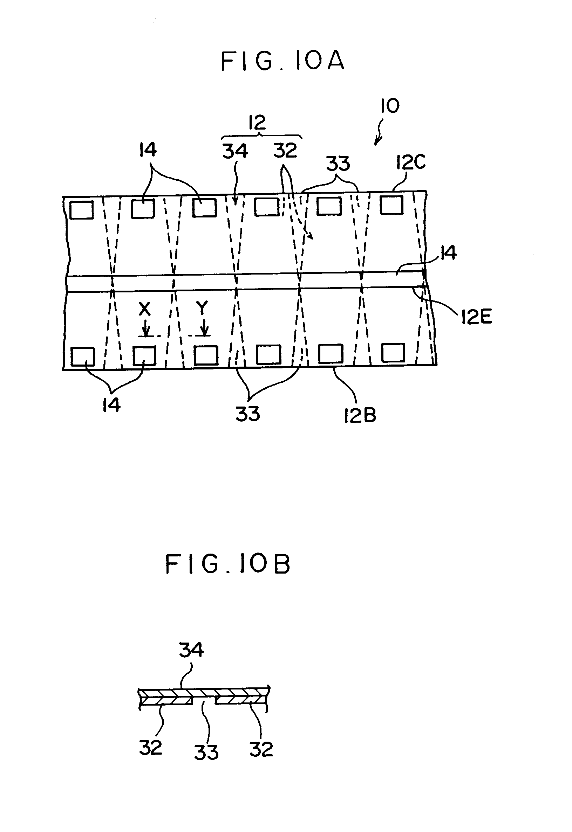

FIGS. 10A and 10B illustrate the winding liner 10 in which the base portion 12 includes non-expanding, non-contracting main liners 32 and a sub-liner 34 which expands and contracts. Triangular-shaped slits 33 are formed in the main liners 32 so as to extend from both of the end portions 12B and 12C to the central portion 12E. The sub-liner 34 covers surface portions 32A of the main liners 32.

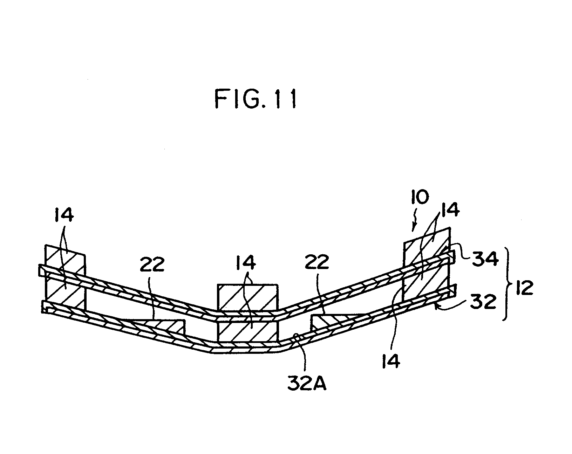

The winding liner 10 normally assumes a planar plate shape. However, as illustrated in FIGS. 9 and 11, when the winding liner 10 is wound around the winding core member 16, the sub-liners 34 extend so that the base portion 12 is slanted in the form of a V-shape with respect to the winding shaft Q along an outer circumferential surface of the winding core member 16.

When the unvulcanized rubber material 22 has a non-symmetric shape, and therefore differs in thickness along the width thereof, the unvulcanized rubber material 22 can be placed on the base portion 12 such that a thicker portion 22A of the unvulcanized rubber material 22 is positioned toward the transverse-direction central portion 12E, at which the perimeter of the base portion 12 is smaller. This arrangement can correct a difference in perimeter between the obverse and reverse of the rolled rubber material 22, which results from a difference in thickness of the unvulcanized rubber material 22. Accordingly, the winding liner 10 can eliminate curling of the unvulcanized rubber material 22 due to the above-described difference in perimeter.

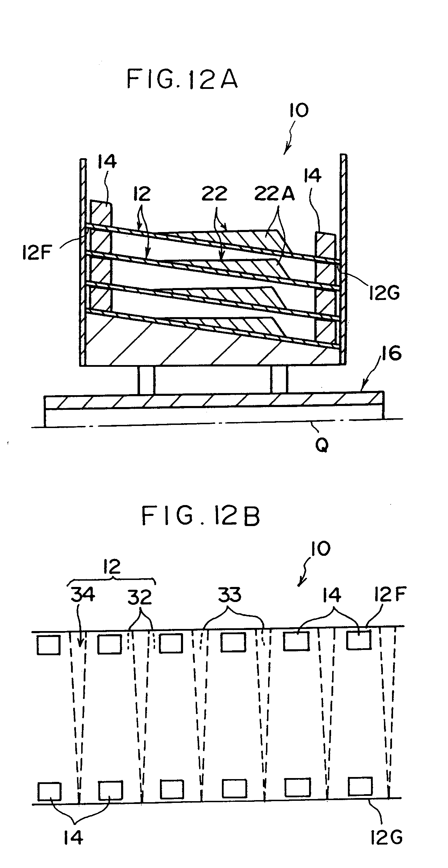

According to the present embodiment, the base portion 12 is provided with the raised portions 14 at the central portion 12E as well as both of the end portions 12B and 12C, so as to permit the base portion 12 to be slanted in a V-shape with respect to the winding shaft Q. However, the present embodiment is not limited to the same. As illustrated in FIG. 12A, it suffices that the raised portions 14 are disposed only at both end portions 12F and 12G of the base portion 12 in the transverse direction thereof. The base portion 12 is thereby inclined from one of the above end portions to the other, for example, from 12F to 12G, or vice versa, in a direction in which either of the end portions 12F and 12G is at a closer distance to the winding shaft Q. In this case as well, as illustrated in FIG. 12B, the base portion 12 includes the non-expanding, non-contracting main liners 32, in which the triangular-shaped slits 33 are formed, and the expanding and contracting sub-liner 34, which covers the surface portions 32A of the main liners 32. The slits 33 extend from one of the aforesaid end portions to the other, that is, from 12F to 12G. Further, similarly to the first embodiment, the base portion 12 may be provided with the flanges 13 at both of the end portions 12B and 12C or at both of the end portions 12F and 12G. Alternatively, the winding core member 30 may be equipped with the flanges 15 at both end portions thereof so as to form a flanged reel around which the winding liner 10 is wound.

(Test Example 1)

In this test, different samples of tread rubber, whose Mooney viscosities are listed in TABLE 1 below, were held on the winding liner 10 according to the first embodiment as shown in FIG. 1 through FIG. 3, the conventional winding liner 64 of FIG. 16, and the booking type carriage 61 of FIG. 15. After the samples were left thereon for six hours, the following were measured for each of the samples: a maximum thickness (hump gauge: H), and a thickness at a central portion in the transverse direction of the sample (center gauge: S). TABLE 1 shows the variation per lot, the difference in variation of the winding liner 10 of the first embodiment with respect to the booking type carriage 61, and the difference in variation of the conventional winding liner 64 with respect to the carriage 61.

TABLE 1

| Types of Tread Rubber | | Variation per lot $H_{mm}/S_{mm}$ | Difference with respect to the booking type carriage $H_{mm}/S_{mm}$ |
|---|---|---|---|
| ML1+4 45 (Mooney viscosity) | Conventional liner | 0.3/0.3 | 0.1/0.1 |
| | Liner of the present embodiment | 0.25/0.2 | 0.05/0 |
| | Booking type carriage | 0.2/0.2 | |
| ML1+4 55 (Mooney viscosity) | Conventional liner | 0.15/0.2 | 0.05/0.1 |
| | Liner of the present embodiment | 0.1/0.15 | 0/0.05 |
| | Booking type carriage | 0.1/0.1 | |

Note that in order to determine the above variation per lot from the sample placed on the carriage 61, a central portion of the same sample in the longitudinal direction thereof was measured.

As evidenced by the results, the performance level of the previously described winding liner and holding device according to the present invention far surpasses the performance levels of the others.

(Test Example 2)

TABLE 2 lists different types of liner materials. Each of the liner materials was adhered to the surface of a test piece (an iron plate 2.5 cm wide and 20 cm long). A rubber sheet was pressed onto the liner materials at a pressure of approximately 1 g/cm$^2$. After 60 hours elapsed, the rubber sheet was peeled from the liner material at a given angle with respect thereto at a speed of 300 mm per minute. Thereafter, resistance to separation of the sheet was measured using a load cell. TABLE 2 indicates results of the test.

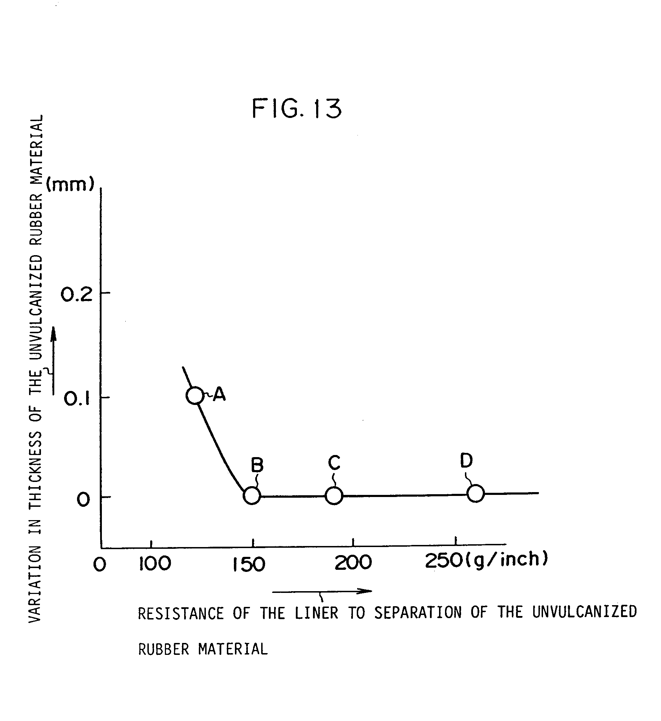

Then, using each of the liner materials, respective base portions 12 of the winding liner 10 according to the first embodiment were formed. The fabricated base portions 12 were left in the state illustrated in FIG. 3 for 12 hours. FIG. 13 illustrates variations in thicknesses of the unvulcanized rubber materials 22 (10 mm in thickness). Such variations result from the elongation of the rubber materials 22 due to sagging of the respective lower halves of the winding liners 10.

TABLE 2

| | Liner Materials | Separation Resistance |
|---|---|---|
| A | Silicon liner: a material formed of a silicon film | 125g/inch |
| B | "Sofit": trade name, produced by Kuraray Co., Ltd. (a thin, plate-shaped material, fabricated from a polyester fabric by a press-forming process) | 150g/inch |
| C | "Lumirror": trade name of a material formed of a polyester film, produced by Toray Industries, Inc. | 180g/inch |
| D | "Somalit/POM": trade name, manufactured by SOMAR Corp. (a thin, plate-shaped material fabricated from an acetal homopolymer) | 270g/inch |

It is apparent from the above results that the surface of the base portion of the winding liner must provide a resistance of at least 150 g/inch to separation of the unvulcanized rubber material 22 from the surface in order to prevent variations in thickness of the rubber material 22.

(Test Example 3)

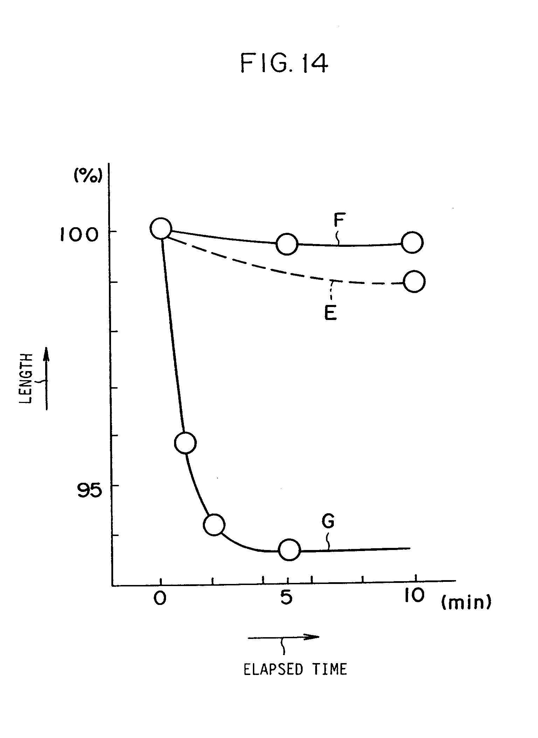

This test was conducted in order to determine how respective lengths of the following samples vary with time: an unvulcanized rubber material E, which was held for two hours on the winding liner 10 according to the first embodiment as illustrated in FIG. 1 through FIG. 3; an unvulcanized rubber material F, which was held on the same winding liner 10 for 20 hours; and an unvulcanized rubber material G, which was not held on the winding liner 10. The samples were first cut to a given length, and were then placed on calcium carbide powder, which was spread on a planar plate, in order to determine the abovementioned variations. FIG. 14 shows results of this test.

It is apparent from the results that the contraction of the unvulcanized rubber material after cutting thereof can be suppressed to two percent or less, without detracting from the dimensional accuracy of the rubber material even when the unvulcanized rubber material is left wound around the winding liner for more than two hours before cutting thereof.

**Claims**

1. A winding liner for an unvulcanized rubber material, comprising:
   a base portion, on which said unvulcanized rubber material is placed, said base portion being a band-shaped, non-expanding, non-contracting member, and being bendable in a longitudinal direction of said base portion; and,
   raised portions, which are provided on a surface of said base portion at both transverse direction end portions of said base portion along the longitudinal direction of said base portion, said raised portions being larger in height than said unvulcanized rubber material such that said raised portions, located at one portion of said base portion, contact a reverse side of a neighboring portion of said base portion when said base portion is wound, said neighboring portion being positioned in a radially outward direction from said one portion of said base portion, so that a space for accommodating said unvulcanized rubber material is defined by said raised portions, said reverse side of said neighboring portion and said surface of said one portion of said base portion.

2. A winding liner for an unvulcanized rubber material according to claim 1, wherein said raised portion is formed by a resilient member shaped as a square pillar.

3. A winding liner for an unvulcanized rubber material according to claim 1, wherein said surface of said base portion exhibits a resistance of at least 150 g/inch to separation of said unvulcanized rubber material from said surface.

4. A winding liner for an unvulcanized rubber material according to claim 1, further comprising: an expanding/contracting liner superposed on said base portion, said base portion being provided with slits at predetermined intervals in a transverse direction of said base portion so that said base portion is inclined with respect to a winding shaft due to said expanding/contracting liner and said slits when said base portion is wound around said winding shaft.

5. A winding liner for an unvulcanized rubber material according to claim 1, further comprising: associating portions, which are provided at both transverse direction end portions of said base portion such that said associating portions, located at one portion of said base portion, are brought into association with both transverse direction end portions of a neighboring portion of said base portion when said base portion is wound, said neighboring portion being located in a radial direction with respect to said one portion of said base portion.

6. A winding liner for an unvulcanized rubber material according to claim 5, wherein said associating portion is a flange.

7. A winding liner for an unvulcanized rubber material according to claim 1, wherein said unvulcanized rubber material is adhered to said base portion.

8. A winding liner for an unvulcanized rubber material according to claim 1, wherein said raised portion is formed by a square pillar shaped member having concave and convex portions on a surface thereof.

**9.** A winding liner for an unvulcanized rubber material according to claim 1, wherein said raised portion is provided with slits at predetermined intervals in the longitudinal direction of said raised portion.

**10.** A winding liner for an unvulcanized rubber material according to claim 1, wherein said raised portions are formed by convex portions which are provided on said base portion at predetermined intervals in the longitudinal direction of said base portion.

**11.** A winding liner for an unvulcanized rubber material according to claim 1, wherein said raised portions are formed by plate members which are provided upright with respect to said base portion at both transverse direction end portions of said base portion, end portions of said plate members being bent respectively at substantially right angles in directions in which said end portions approach each other.

**12.** A winding liner for an unvulcanized rubber material according to claim 1, wherein said raised portion is formed by a plate member, whose transverse cross-section is trapezoidal, said plate members being provided upright with respect to said base portion at both transverse direction end portions of said base portion.

**13.** A winding liner for an unvulcanized rubber material and a holding device for take-up of said winding liner, said unvulcanized rubber material being retained on said winding liner by said winding liner being wound around a winding shaft when said unvulcanized rubber material is set on said winding liner, said winding liner and said holding device comprising:

a base portion, which is a band-shaped, non-expanding, non-contracting member and which is bendable in a longitudinal direction of said base portion;

raised portions, which are provided on a surface of said base portion at both transverse direction end portions of said base portion along the longitudinal direction of said base portion, said raised portions being larger in height than said unvulcanized rubber material such that said raised portions, located at one portion of said base portion, contact a reverse side of a neighboring portion of said base portion when said base portion is wound around said winding shaft, said neighboring portion being located in a radially outward direction from said one portion of said base portion, so that a space for accommodating said unvulcanized rubber material is defined by said raised portions, said reverse side of said neighboring portion and said surface of said one portion of said base portion; and,

flanges, provided at both transverse direction end portions of said winding shaft, both transverse direction end portions of said winding liner being guided to said flanges when said winding liner is wound around said winding shaft so that said both transverse direction end portions of said winding liner are aligned in a radial direction of said winding shaft.

**14.** A winding liner for an unvulcanized rubber material, comprising:

a base portion, on which said unvulcanized rubber material is placed, said base portion being a band-shaped, non-expanding, non-contracting member and being bendable in a longitudinal direction of said base portion; and,

raised portions, which are provided on a surface of said base portion along the longitudinal direction of said base portion at both end portions and an intermediate portion in a transverse direction of said base portion, said raised portions being larger in height than said unvulcanized rubber material such that said raised portions, located at one portion of said base portion, contact a reverse side of a neighboring portion of said base portion when said base portion is wound, said neighboring portion being located in a radially outward direction from said one portion of said base portion, so that spaces for accommodating said unvulcanized rubber material are defined by said raised portions, said reverse side of said neighboring portion and said surface of said one portion of said base portion.

**15.** A winding liner for an unvulcanized rubber material according to claim 14, wherein said raised portion is formed by a resilient member shaped as a square pillar.

**16.** A winding liner for an unvulcanized rubber material according to claim 14, wherein said surface of said base portion exhibits a resistance of at least 150 g/inch to separation of said unvulcanized rubber material from said surface.

**17.** A winding liner for an unvulcanized rubber material according to claim 14, further comprising: an expanding/contracting liner superposed on said base portion, said base portion being provided with slits at predetermined intervals in the transverse direction of said base portion so that said base portion is inclined with respect to a winding shaft due to said expanding/contracting liner and said slits when said base portion is wound around said winding shaft.

18. A winding liner for an unvulcanized rubber material according to claim 14, further comprising: associating portions, which are provided at both transverse direction end portions of said base portion such that said associating portions, located at one portion of said base portion, are brought into association with both transverse direction end portions of a neighboring portion of said base portion when said base portion is wound, said neighboring portion being located in a radial direction with respect to said one portion of said base portion.

19. A winding liner for an unvulcanized rubber material according to claim 14, wherein said unvulcanized rubber material is adhered to said base portion.

20. A winding liner for an unvulcanized rubber material and a holding device for take-up of said winding liner, said unvulcanized rubber material being retained on said winding liner by said winding liner being wound around a winding shaft when said unvulcanized rubber material is set on said winding liner, said winding liner and said holding device comprising:
a base portion, which is a band-shaped, non-expanding, non-contracting member and which is bendable in a longitudinal direction of said base portion;
raised portions, which are provided on a surface of said base portion along the longitudinal direction of said base portion at both end portions and an intermediate portion in a transverse direction of said base portion, said raised portions being larger in height than said unvulcanized rubber material such that said raised portions, located at one portion of said base portion, contact a reverse side of a neighboring portion of said base portion when said base portion is wound around said winding shaft, said neighboring portion being located in a radially outward direction from said one portion of said base portion, so that spaces for accommodating said unvulcanized rubber material are defined by said raised portions, said reverse side of said neighboring portion and said surface of said one portion of said base portion; and,
flanges, provided at both transverse direction end portions of said winding shaft, both transverse direction end portions of said winding liner being guided to said flanges when said winding liner is wound around said winding shaft so that said both transverse direction end portions of said winding liner are aligned in a radial direction of said winding shaft.

# FIG. 1

FIG. 2

FIG. 3

FIG. 4A

FIG. 4B

FIG. 4C

FIG. 5

FIG. 6A

FIG. 6B

FIG. 7

FIG. 8

FIG. 9

# FIG. IOA

# FIG. IOB

# FIG.11

FIG.12A

FIG.12B

## FIG. 13

VARIATION IN THICKNESS OF THE UNVULCANIZED RUBBER MATERIAL (mm)

0.2

0.1 — A

B C D

0

O 100 150 200 250 (g/inch)

RESISTANCE OF THE LINER TO SEPARATION OF THE UNVULCANIZED RUBBER MATERIAL

FIG. 14

## FIG. 15

## PRIOR ART

# FIG. 16

# PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-B-1 260 767 (CONTINENTAL GUMMI-WERKE AKTIENGESELLSCHAFT) | 1,5-6,13 | B29C31/00 B29D30/52 |
| Y | * column 3 - column 4; figures * | 3,7 | |
| Y | GB-A-882 397 (DUNLOP RUBBER COMPANY LIMITED) * page 3, line 23 - line 34; figures 5-6 * | 3,7 | |
| A | EP-A-0 472 195 (MILLIKEN EUROPE N.V.) * column 1, paragraph 1 -paragraph 2 * * column 3 * | 1,3,7-12 | |
| A | EP-A-0 344 019 (BRIDGESTONE CORPORATION) * page 5, line 25 - line 32 * | 4 | |
| A | DE-B-1 262 584 (CONTINENTAL GUMMI-WERKE AKTIENGESELLSCHAFT) | | |

-----

**TECHNICAL FIELDS SEARCHED (Int. Cl.5)**

B29C
B29D

The present search report has been drawn up for all claims

| Place of search | Date of completion of the search | Examiner |
|---|---|---|
| THE HAGUE | 11 JUNE 1993 | PIPPING L.E.L. |